# FASCICULE DE BREVET EUROPEEN

(11) **EP 2 582 601 B1**
(45) Date de publication et mention de la délivrance du brevet: **12.03.2014**
(21) Numéro de dépôt: 11722459.2
(22) Date de dépôt: 01.06.2011
(51) Int. Cl.: B65G 43/02, B65G 47/84

(54) **DISPOSITIF DE TRANSPORT DE CORPS CREUX**
VORRICHTUNG ZUM TRANSPORT VON HOHLEN KÖRPERN
DEVICE FOR TRANSPORTING HOLLOW BODIES

(30) Priorité: 17.06.2010 FR 1054820
(43) Date de publication de la demande: 24.04.2013
(73) Titulaire: Sidel Participations, 76930 Octeville sur Mer (FR)
(72) Inventeur: TURLOTTE, Denis, F-76930 Octeville Sur Mer (FR); MAUROVIC, Yvan, F-76930 Octeville Sur Mer (FR)
(74) Mandataire: Gevers France
(86) Numéro de dépôt international: PCT/EP2011/059031
(87) Numéro de publication internationale: WO 2011/157557

(56) Documents cités:
- WO-A1-00/61472
- FR-A1- 2 895 384
- US-A- 3 479 640

## Description

L'invention concerne un dispositif de transport de corps creux réalisés en matériau thermoplastique.

L'invention concerne plus particulièrement un dispositif de transport de corps creux réalisés en matériau thermoplastique qui comporte :
- au moins un moyen de préhension d'un corps creux qui est destiné à être déplacé le long d'une trajectoire déterminée et qui comporte au moins un suiveur de came réalisé en un matériau conducteur d'électricité ;
- au moins une came fixe de commande des moyens de préhension qui est agencée le long d'au moins un tronçon de la trajectoire du moyen de préhension et qui est destinée à coopérer avec le suiveur de came, la came étant réalisée en un matériau conducteur d'électricité ;
- une couche de contact qui est réalisée en un matériau isolant électriquement et qui est interposée entre la came et le suiveur de came.

La fabrication de récipients en matière thermoplastique, tels que des bouteilles, est réalisée à partir de préformes qui sont conditionnées thermiquement, puis moulées par soufflage ou étirage-soufflage.

Dans la suite de la description, le terme "corps creux" pourra s'appliquer aussi bien aux préformes, qu'aux récipients finaux.

Les installations pour la production en série de récipients en matière thermoplastique comportent ainsi au moins un poste de conditionnement thermique formé par un tunnel de chauffage dans lequel défilent les préformes, et au moins un poste de soufflage ou d'étirage/soufflage qui est équipé de moules aptes à recevoir à la chaîne les préformes conditionnées thermiquement.

Les préformes sont en outre transportées d'un poste à l'autre par des moyens de transport. Par exemple, il est connu d'agencer les postes à proximité les uns des autres, et de transporter les préformes d'un poste à l'autre au moyen de roues de transfert équipées de moyens de préhension.

Généralement, les moyens de préhension sont commandés au moyen de suiveurs de came qui coopèrent avec des cames. Les cames forment des éléments fixes qui sont généralement onéreux à produire. Pour éviter l'usure des cames, les suiveurs de came sont munis de galets métalliques enrobés dans un revêtement de caoutchouc qui protège les cames.

Cependant, il arrive que le revêtement de protection des galets de suiveur de came se dégrade, voire se rompe accidentellement. Le galet métallique entre alors directement en contact avec la came. Ceci est susceptible de provoquer une usure de la came.

De plus, l'installation est susceptible d'être utilisée pendant un long moment avant que la dégradation, voire la rupture du revêtement ne soit constatée, par exemple par inspection visuelle.

Le document FR-A1-2.895.384 divulgue un dispositif de transport selon le préambule de la revendication 1 avec de tels moyens de préhensions. Cependant, ce document ne propose pas de solution pour détecter la rupture du revêtement de protection des galets de suiveur de came.

Pour éviter que la came ne soit usée, l'invention propose donc un dispositif du typé décrit précédemment, caractérisé en ce que le suiveur de came est raccordé à une source d'un premier signal électrique, tandis que la came est raccordée à une source d'un deuxième signal électrique, et en ce que le dispositif comporte un organe de détection d'un contact électrique entre le suiveur de came et la came pour signaler une dégradation de la couche.

Selon d'autres caractéristiques de l'invention :
- la source du premier signal est formée par la masse électrique ;
- le deuxième signal électrique de la came est un potentiel qui est supérieur à un potentiel du premier signal électrique du suiveur de came ;
- l'organe de détection est formé par un instrument de mesure d'une différence de potentiels dont une borne est raccordée électriquement à la came et dont une autre borne est raccordée électriquement au suiveur de came, une chute de tension électrique indiquant un contact électrique entre le suiveur de came et la came ;
- l'organe de détection est formé par un dipôle électrique qui est susceptible de détecter la circulation d'un courant électrique et qui est interposé dans le circuit électrique entre la source du deuxième signal électrique et la came, un contact électrique entre la came et le suiveur de came provoquant la circulation d'un courant électrique à l'intérieur du dipôle ;
- le suiveur de came est formé par un galet qui est recouvert d'une bande de roulement formant la couche de matériau isolant ;
- le suiveur de came et la came sont susceptibles de commander l'ouverture et la fermeture des moyens de préhension ;
- les moyens de préhension comportent une pince qui est agencée à l'extrémité d'un bras orientable et en ce que le suiveur de came et la came sont susceptibles de commander l'orientation du bras.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue en perspective qui représente un dispositif de transport de préforme qui est réalisé selon les enseignements de l'invention ;
- la figure 2 est une vue de dessous à plus grande échelle d'un moyen de préhension du dispositif de transport de la figure 1 ;
- la figure 3 est une vue de côté du moyen de préhension de la figure 2 ;
- la figure 4 est une vue schématique qui représente un moyen de préhension et une came fixe du dispositif de la figure 1 ainsi qu'un circuit électrique muni d'un organe de détection d'un court-circuit selon un premier mode de réalisation de l'invention ;
- la figure 5 est une vue similaire à celle de la figure 4 qui représente un deuxième mode de réalisation de l'invention.

Dans la suite de la description, des éléments ayant une fonction identique, analogue ou similaire seront désignés par des mêmes numéros de référence.

Dans la suite de la description, on adoptera à titre non limitatif des orientations verticales et radiales indiquée par les flèches "V, R" des figures.

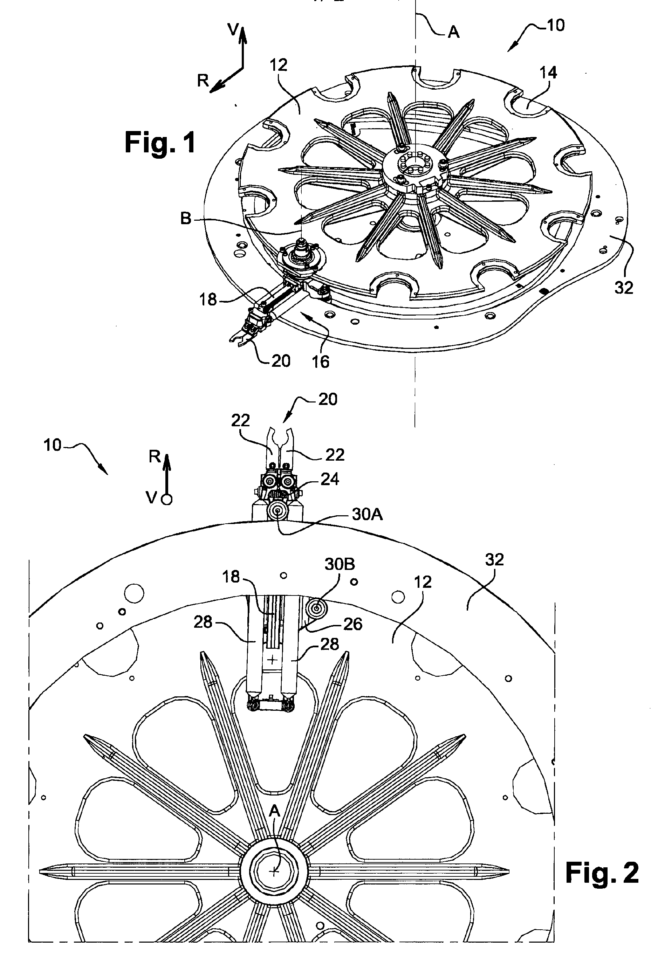

On a représenté à la figure 1 un dispositif 10 de transport de corps creux (non représentés) réalisés en matériau thermoplastique. Ce dispositif 10 de transport équipe une installation pour la production en grande série de récipients en matériau thermoplastique. Dans une telle installation, les récipients finaux sont formés par soufflage d'une préforme en matériau thermoplastique.

Une telle installation comporte classiquement un four de conditionnement thermique (non représenté) dans lequel défilent les préformes, des moyens d'alimentation (non réprésentés) du four en préformes, une station (non représentée) de soufflage ou d'étirage-soufflage des préformes ainsi conditionnées thermiquement, et le dispositif 10 de transport des préformes conditionnées thermiquement jusqu'à la station de soufflage.

Le dispositif 10 de transport représenté à la figure 1 est ici agencé de manière à transporter les préformes depuis le four de conditionnement jusqu'à la station de soufflage.

Selon une variante non représentée, l'invention est bien entendu applicable aux moyens d'alimentation du four en préformes, notamment lorsque ces moyens sont formés par une roue de transfert, ou à tout autre moyen de transport de préformes susceptible d'équiper l'installation pour la production de récipients.

Le dispositif 10 de transport comporte ici une roue 12 horizontale qui est montée rotative autour d'un axe "A" de rotation vertical. Des encoches 14 sont réalisées à la périphérie extérieure de la roue 12.

Chaque encoche 14 forme un emplacement dans lequel est fixé un moyen 16 de préhension d'une préforme. Dans l'exemple représenté à la figure 1 , un seul moyen 16 de préhension a été représenté pour des raisons de clarté.

Le moyen 16 de préhension comporte plus particulièrement un bras 18 radial orientable. Une première extrémité intérieure du bras 18 est montée à la périphérie de la roue 12 de manière pivotante autour d'un axe "B" vertical. Une deuxième extrémité extérieure libre du bras 18 est équipée d'une pince 20 pour saisir une préforme.

Comme représenté plus en détail à la figure 2, la pince 20 est constituée de deux mors 22 qui sont montés pivotants autour de deux axes verticaux entre une position écartée permettant de recevoir un col de préforme et une position fermée dans laquelle le col de la préforme est serré. La pince 20 est rappelée élastiquement vers sa position fermée au moyen d'un premier ressort 24.

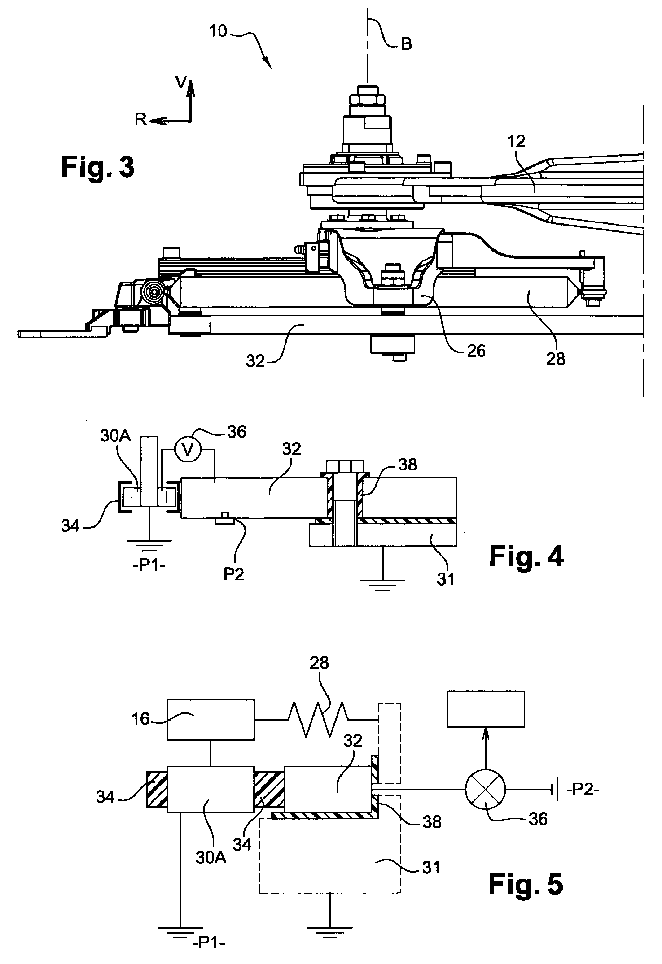

Le bras 18 est ici susceptible de coulisser selon son axe longitudinal par rapport à son axe "B" de pivotement entre une position escamotée radialement vers l'intérieur et une position étendue radialement vers l'extérieur. A cet effet, le bras 18 est reçu dans une glissière 26 qui est elle-même montée pivotante autour de l'axe "B" sur le roue 12, comme cela est illustré à la figure 3.

Le bras 18 est rappelé vers sa position escamotée par deux ressorts 28 de rappel qui sont agencés parallèlement. Une première extrémité extérieure de chaque ressort 28 est attachée à la pince 20 tandis qu'une deuxième extrémité intérieure de chaque ressort 28 est attachée à la glissière 26.

Le moyen 16 de préhension est ainsi susceptible d'être déplacé par rotation de la roue 12 le long d'une trajectoire circulaire autour de l'axe "A".

Pour que la pince 20 de chaque moyen 16 de préhension puisse saisir ou décharger une préforme de manière optimale, c'est-à-dire sans endommager la préforme, ni la laisser tomber, on a prévu des moyens pour commander la position longitudinale du bras 18 et pour commander le pivotement du bras 18 autour de son axe "B".

Pour ce faire, le moyen 16 de préhension comporte au moins un suiveur 30 de came réalisé en un matériau conducteur d'électricité, par exemple en un matériau métallique tel que de l'acier. Comme représenté à la figure 2, le moyen 16 de préhension est ici équipé de deux suiveurs de came qui seront par la suite indiqués par les références 30A et 30B.

Le premier suiveur 30A de came est ici porté sur un tronçon d'extrémité extérieur du bras 18. Le premier suiveur 30A de came est plus particulièrement agencé à proximité de la pince 20.

Le deuxième suiveur 30B de came est ici porté par la glissière 26, à proximité de l'extrémité intérieure du bras 18.

Chaque suiveur 30A, 30B de came est recouvert d'une couche 34 de contact réalisée en matériau isolant électriquement.

Dans l'exemple représenté aux figures, chaque galet formant suiveur 30A, 30B de came est réalisé en métal, et la jante dudit galet en métal est recouverte d'une bande de roulement en caoutchouc ou en plastique. La bande de roulement forme ainsi ladite couche 34 en matériau isolant électriquement.

Les deux suiveurs 30A, 30B de came sont agencés verticalement à la même hauteur.

Chaque suiveur 30A, 30B de came est destiné à coopérer avec au moins une came 32 fixe de commande des moyens 16 de préhension. La came 32 est agencée le long d'au moins un tronçon de la trajectoire du moyen 16 de préhension

Comme représenté à la figure 1, la came 32 est ici formée par un anneau qui entoure complètement la roue 12. La came 32 est fixée sur un châssis 31 (représenté aux figures 4 et 5) qui est lui-même fixé au sol.

La came 32 est réalisée en un matériau robuste qui présente aussi, dans le cadre de l'invention, la propriété de conduire l'électricité. La came 32 est par exemple réalisée en un métal, tel que de l'acier.

La came 32 comporte ici un premier chemin 32A de came et un deuxième chemin 32B de came qui sont respectivement destinés à coopérer avec le premier suiveur 30A de came et avec le deuxième suiveur 30B de came. Le premier chemin 32A de came est formé par la tranche verticale extérieure de la came 32, tandis que le deuxième chemin 32B de came est formé par la tranche verticale intérieure de la came 32.

La conformation des chemins 32A, 32B de came permet ainsi de commander à la fois la position longitudinale du bras 18 et la position angulaire du bras 18 autour de son axe "B" de pivotement.

La fonction de la couche 34 de contact portée par les galets suiveurs 30A, 30B de came est notamment d'éviter l'usure de la came 32, et par incidence des galets suiveurs 30A, 30B de came, en empêchant un frottement métal contre métal de chaque galet suiveur 30A, 30B de came sur le chemin 32A, 32B de came associé. La couche 34 de contact est en effet interposée entre la came 32 et chaque galet suiveur 30A, 30B de came associé.

On a constaté que la couche 34 de contact était parfois dégradée. Par dégradation, on entend que la couche 34 de contact peut être abîmée, trouée, voire rompue. En cas de rupture, la couche 34 de contact est alors susceptible de tomber totalement du galet suiveur 30A, 30B de came.

Cette dégradation peut être la conséquence d'une usure normale ou de conditions d'utilisation exceptionnelles. Or, lorsque la couche 34 de contact est dégradée, la partie métallique du galet suiveur 30A, 30B de came est alors directement en contact avec le chemin 32A, 32B de came associé, ce qui provoque une usure de la came 32.

La came 32 étant une pièce onéreuse et complexe à remplacer, l'invention propose d'équiper le dispositif 10 de transport avec des moyens pour détecter la rupture d'une couche 34 de contact.

Comme représenté à la figure 4, chaque galet métallique formant suiveur 30A, 30B de came est soumis à un premier signal électrique "P1", qui est ici un potentiel constant, tandis que la came 32 est soumise à un deuxième signal électrique "P2" qui est ici un potentiel constant. Chaque galet suiveur 30A, 30B de came étant isolé électriquement de la came 32 par la couche 34 isolante de contact, la différence de potentiels "P2-P1" entre ces deux éléments est normalement constante.

Les deux suiveurs 30A, 30B de came sont reliés électriquement entre eux, par exemple par l'intermédiaire de la structure métallique du bras 18. Ainsi, les deux suiveurs 30A, 30B de came peuvent soumis simultanément au même premier signal "P1" par l'intermédiaire d'une unique connexion électrique du bras 18 avec la source du premier signal "P1".

Chaque signal "P1" et "P2" présente ici une valeur constante.

Dans l'exemple représenté à la figure 4, la source du premier signal "P1" est formée par la masse électrique tandis que la source du deuxième signal "P2" est formé par la borne positive d'un accumulateur d'électricité ou d'un générateur de courant continu. Le deuxième signal électrique "P2" de la came 32 est ainsi supérieur au premier signal électrique "P1" de chaque suiveur 30A, 30B de came.

Le châssis 31 qui porte la came 32 est généralement relié à la masse électrique. La came 32 est donc isolée électriquement du châssis 31 par une isolation 38 afin d'éviter toute fuite électrique.

Le dispositif 10 comporte un organe 36 de détection d'un contact électrique entre chaque suiveur de came 30A, 30B et la came 32 pour signaler une rupture de la couche 34 de contact.

Selon un premier mode de réalisation de l'invention, l'organe 36 de détection est formé par un instrument de mesure d'une différence de potentiels, tel qu'un voltmètre, dont une borne est raccordée électriquement à la came 32 et dont une autre borne est raccordée électriquement au suiveur 30A, 30B de came. La deuxième borne de l'organe 36 de détection peut être par exemple reliée électriquement au bras 18.

L'organe 36 de détection formé par le voltmètre mesure ainsi une différence de potentiels égale à P2-P1 lorsque la came 32 est convenablement isolée de chaque suiveur 30A, 30B de came au moyen de la couche 34 isolante.

Lorsqu'une chute de tension électrique est constatée, cela indique un contact électrique entre au moins l'un des suiveurs 30A, 30B de came et la came 32. On en déduit une rupture d'une des couches 34 de contact. Une action adaptée est alors enclenchée.

L'organe 36 de détection est par exemple relié à un moyen d'avertissement sonore ou visuel qui avertit un opérateur qu'une couche 34 de contact est endommagée.

L'organe 36 de détection peut en plus être relié à un automate qui commande l'arrêt immédiat ou légèrement différé de la chaîne de fabrication afin d'éviter l'usure de la came 32.

Selon un deuxième mode de réalisation de l'invention qui est représenté à la figure 5, l'organe 36 de détection est formé par un dipôle électrique, tel qu'une lampe ou une LED, susceptible de détecter la circulation d'un courant électrique et qui est interposé dans le circuit électrique entre la source du deuxième signal "P2" électrique et la came 32. Ainsi, lorsque la couche 34 de contact est endommagée ou rompus, le contact électrique entre la came 32 et au moins l'un des suiveurs 30A, 30B de came provoque la circulation d'un courant électrique à l'intérieur du dipôle.

Selon une variante non représentée de l'invention, l'ouverture et la fermeture de la pince des moyens de préhension est susceptible d'être commandée par un suiveur de came porté par les moyens de préhension en coopération avec une came fixe. L'invention décrite précédemment est alors susceptible de s'appliquer à de tels moyens de commande.

Un tel dispositif 10 permet ainsi de détecter rapidement une rupture de la couche 34 de contact.

En outre, les ressorts 28 de rappel sont aussi réalisés en un matériau conducteur d'électricité et ils sont aussi reliés électriquement à la source du premier signal P1 par l'intermédiaire du bras 18. Il est ainsi possible de détecter un dysfonctionnement dû à une rupture d'un de ces ressorts 28 lorsque ledit ressort 28 rompu frotte contre la came 32.

La présente invention est appliquée à une roue de transfert pour des corps creux en matériaux thermoplastiques. On comprendra cependant que le terme "dispositif de transport" utilisé dans les revendications peut aussi se référer à tout autre dispositif apte à déplacer des corps creux tels que des moules de soufflage de corps creux qui sont montés sur un carrousel, la rotation du carrousel entraînant un déplacement des corps creux.

## Revendications

1. Dispositif (10) de transport de corps creux réalisés en matériau thermoplastique qui comporte :
- au moins un moyen (16) de préhension d'un corps creux qui est destiné à être déplacé le long d'une trajectoire déterminée et qui comporte au moins un suiveur (30A, 30B) de came réalisé en un matériau conducteur d'électricité ;
- au moins une came (32) fixe de commande des moyens (16) de préhension qui est agencée le long d'au moins un tronçon de la trajectoire du moyen (16) de préhension et qui est destinée à coopérer avec le suiveur (30A, 30B) de came, la came (32) étant réalisée en un matériau conducteur d'électricité ;
- une couche (34) de contact qui est réalisée en un matériau isolant électriquement et qui est interposée entre la came (32) et le suiveur (30A, 30B) de came ;
**caractérisé en ce que** le suiveur (30A, 30B) de came est raccordé à une source d'un premier signal (P1) électrique, tandis que la came (32) est raccordée à une source d'un deuxième signal (P2) électrique, et **en ce que** le dispositif (10) comporte un organe (36) de détection d'un contact électrique entre le suiveur (30A, 30B) de came et la came (32) pour signaler une dégradation de la couche (34).

2. Dispositif (10) selon la revendication précédente, **caractérisé en ce que** la source du premier signal (P1) est formée par la masse électrique.

3. Dispositif (10) selon l'une quelconque des revendications précédentes, **caractérisé en ce que** le deuxième signal électrique (P2) de la came (32) est un potentiel qui est supérieur au potentiel du premier signal électrique (P1) du suiveur (30A, 30B) de came.

4. Dispositif (10) selon l'une quelconque des revendications précédentes, **caractérisé en ce que** l'organe (36) de détection est formé par un instrument de mesure d'une différence de potentiels dont une borne est raccordée électriquement à la came (32) et dont une autre borne est raccordée électriquement au suiveur (30A, 30B) de came, une chute de tension électrique indiquant un contact électrique entre le suiveur (30A, 30B) de came et la came (32).

5. Dispositif (10) selon l'une quelconque des revendications précédentes, **caractérisé en ce que** l'organe (36) de détection est formé par un dipôle électrique qui est susceptible de détecter la circulation d'un courant électrique et qui est interposé dans le circuit électrique entre la source du deuxième signal électrique (P2) et la came (32), un contact électrique entre la came (32) et le suiveur (30A, 30B) de came provoquant la circulation d'un courant électrique à l'intérieur du dipôle.

6. Dispositif (10) selon l'une quelconque des revendications précédentes, **caractérisé en ce que** le suiveur (30A, 30B) de came est formé par un galet qui est recouvert d'une bande de roulement formant la couche (34) de matériau isolant.

7. Dispositif (10) selon l'une quelconque des revendications précédentes, **caractérisé en ce que** le suiveur (30A, 30B) de came et la came (32) sont susceptibles de commander l'ouverture et la fermeture des moyens de préhension.

8. Dispositif (10) selon l'une quelconque des revendications précédentes, **caractérisé en ce que** les moyens (16) de préhension comportent une pince (20) qui est agencée à l'extrémité d'un bras (18) orientable et **en ce que** le suiveur (30A, 30B) de came et la came (32) sont susceptibles de commander l'orientation du bras.

## Patentansprüche

1. Vorrichtung (10) zum Transport von hohlen Körpern, die aus einem Thermoplast hergestellt sind, umfassend:
- mindestens ein Mittel (16) zum Ergreifen eines hohlen Körpers, das dazu bestimmt ist, entlang einer bestimmten Bahn verschoben zu werden, und das mindestens einen Nockenverfolger (30A, 30B) umfasst, der aus einem elektrisch leitenden Material hergestellt ist;
- mindestens eine feste Steuernocke (32) für die Greifmittel (16), die entlang mindestens eines Abschnitts der Bahn des Greifmittels (16) angeordnet und dazu bestimmt ist, mit dem Nockenverfolger (30A, 30B) zusammenzuwirken, wobei die Nocke (32) aus einem elektrisch leitenden Material hergestellt ist;
- eine Kontaktschicht (34), die aus einem elektrisch isolierenden Material hergestellt und zwischen der Nocke (32) und dem Nockenverfolger (30A, 30B) angeordnet ist;
**dadurch gekennzeichnet, dass** der Nockenverfolger (30A, 30B) an eine Quelle eines ersten elektrischen Signals (P1) angeschlossen ist, während die Nocke (32) an eine Quelle eines zweiten elektrischen Signals (P2) angeschlossen ist, und dass die Vorrichtung (10) ein Element (36) zur Erfassung eines elektrischen Kontakts zwischen dem Nockenverfolger (30A, 30B) und der Nocke (32) umfasst, um eine Verschlechterung der Schicht (34) anzuzeigen.

2. Vorrichtung (10) nach dem vorhergehenden Anspruch, **dadurch gekennzeichnet, dass** die Quelle des ersten Signals (P1) von der elektrischen Masse gebildet ist.

3. Vorrichtung (10) nach einem der vorhergehenden Ansprüche, **dadurch gekennzeichnet, dass** das zweite elektrische Signal (P2) der Nocke (32) ein Potential ist, das größer als das Potential des ersten elektrischen Signals (P1) des Nockenverfolgers (30A, 30B) ist.

4. Vorrichtung (10) nach einem der vorhergehenden Ansprüche, **dadurch gekennzeichnet, dass** das Erfassungselement (36) von einem Messinstrument einer Potentialdifferenz gebildet ist, bei dem eine Klemme elektrisch an die Nocke (32) angeschlossen ist, und bei dem eine andere Klemme elektrisch an den Nockenverfolger (30A, 30B) angeschlossen ist, wobei ein elektrischer Spannungsabfall einen elektrischen Kontakt zwischen dem Nockenverfolger (30A, 30B) und der Nocke (32) anzeigt.

5. Vorrichtung (10) nach einem der vorhergehenden Ansprüche, **dadurch gekennzeichnet, dass** das Erfassungselement (36) von einem elektrischen Dipol gebildet ist, der die Zirkulation eines elektrischen Stroms erfassen kann, und der in der elektrischen Schaltung zwischen der Quelle des zweiten elektrischen Signals (P2) und der Nocke (32) angeordnet ist, wobei ein elektrischer Kontakt zwischen der Nocke (32) und dem Nockenverfolger (30A, 30B) die Zirkulation eines elektrischen Stroms innerhalb des Dipols hervorruft.

6. Vorrichtung (10) nach einem der vorhergehenden Ansprüche, **dadurch gekennzeichnet, dass** der Nockenverfolger (30A, 30B) von einer Rolle gebildet ist, die mit einem Laufband bedeckt ist, das die Schicht (34) aus Isoliermaterial bildet.

7. Vorrichtung (10) nach einem der vorhergehenden Ansprüche, **dadurch gekennzeichnet, dass** der Nockenverfolger (30A, 30B) und die Nocke (32) geeignet sind, das Öffnen und Schließen der Greifmittel zu steuern.

8. Vorrichtung (10) nach einem der vorhergehenden Ansprüche, **dadurch gekennzeichnet, dass** die Greifmittel (16) eine Klemme (20) umfassen, die am Ende eines ausrichtbaren Arms (18) angeordnet ist, und dass der Nockenverfolger (30A, 30B) und die Nocke (32) die Ausrichtung des Arms steuern können.

## Claims

1. A conveyor device (10) for transporting hollow bodies formed of a thermoplastic material, which comprises:
- at least one means (16) for grasping a hollow body which is to be displaced along a given trajectory, comprising at least one cam follower (30A, 30B) constructed of an electrically conductive material;
- at least one fixed cam (32) for the control of the means for grasping (16), arranged longitudinally to at least one section of the trajectory of the means for grasping (16) and designed to cooperate with the cam follower (30A, 30B), the cam (32) being constructed of an electrically conductive material;
- a contact layer (34), which is formed of an electrically insulating material and is interposed between the cam (32) and the cam follower (30A, 30B);
**characterized in that** the cam follower (30A, 30B) is connected to a source of a first electrical signal (P1), whereas the cam (32) is connected to a source of a second electrical signal (P2), and **in that** the device (10) is provided with an element (36) for the detection of electrical contact between the cam follower (30A, 30B) and the cam (32), thereby signaling the deterioration of the layer (34).

2. The device (10) as claimed in the preceding claim, **characterized in that** the source of the first signal (P1) is provided by the ground potential.

3. The device (10) as claimed in any one of the preceding claims, **characterized in that** the second electrical signal (P2) for the cam (32) is a potential which exceeds the potential of the first electrical signal (P1) for the cam follower (30A, 30B).

4. The device (10) as claimed in any one of the preceding claims, **characterized in that** the detection element (36) is formed by an instrument for the measurement of potential difference, one terminal of which is electrically connected to the cam (32) and another terminal of which is electrically connected to the cam follower (30A, 30B), whereby a drop in voltage indicates electrical contact between the cam follower (30A, 30B) and the cam (32).

5. The device (10) as claimed in any one of the preceding claims, **characterized in that** the detection element (36) is formed by an electric dipole which is capable of detecting the flow of an electric current and is interposed in the electric circuit between the source of the second electrical signal (P2) and the cam (32), whereby electrical contact between the cam (32) and the cam follower (30A, 30B) results in the flow of an electric current on the interior of the dipole.

6. The device (10) as claimed in any one of the preceding claims, **characterized in that** the cam follower (30A, 30B) is formed by a roller covered with a rolling tread which forms the insulating material layer (34).

7. The device (10) as claimed in any one of the preceding claims, **characterized in that** the cam follower (30A, 30B) and the cam (32) are capable of controlling the opening and closure of the means for grasping.

8. The device (10) as claimed in any one of the preceding claims, **characterized in that** the means for grasping (16) comprise a clamp (20) which is mounted on the end of an articulated arm (18), and **in that** the cam follower (30A, 30B) and the cam (32) are capable of controlling the orientation of the arm.
